(19) Europäisches Patentamt
European Patent Office
Office européen des brevets

(11) **EP 4 345 689 A1**

(12) **EUROPEAN PATENT APPLICATION**

(43) Date of publication:
**03.04.2024 Bulletin 2024/14**

(21) Application number: **22198157.4**

(22) Date of filing: **27.09.2022**

(51) International Patent Classification (IPC):
**G06N 3/0455** (2023.01)     **G06N 3/088** (2023.01)
**G06N 3/094** (2023.01)

(52) Cooperative Patent Classification (CPC):
**G06N 3/0455; G06N 3/088; G06N 3/094**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA
Aichi-Ken 471-8571 (JP)**
• **The Chancellor, Masters and Scholars of
The University of Oxford
Oxford, Oxfordshire OX1 2JD (GB)**

(72) Inventors:
• **OTHMEZOURI, Gabriel
1140 Brussels (BE)**
• **PETROV, Aleksandar
Oxford, OX1 2JD (GB)**
• **KWIATKOWSKA, Marta
Oxford, OX1 2JD (GB)**

(74) Representative: **Cabinet Beau de Loménie
158, rue de l'Université
75340 Paris Cedex 07 (FR)**

(54) **EVALUATION AND TRAINING METHODS FOR UNSUPERVISED REPRESENTATION ENCODERS**

(57)     A computer-implemented evaluation method (100) for unsupervised robustness evaluation of an encoder model ($f$) configured to encode an instance, such as an image, into a representation, the evaluation method comprising:

- providing (10) a testing set comprising at least one testing instance ($x$);
- generating (12) at least one testing adversarial instance ($\hat{x}$) based on the testing set;
- evaluating (14) unsupervised robustness of the encoder model with a measuring function which takes, as an input, a representation ($f(\hat{x})$) of the at least one testing adversarial instance and a representation ($f(x)$) of the at least one testing instance, encoded with the encoder model.

A computer-implemented training method (200) for an encoder model ($f$), comprising evaluating unsupervised robustness with the above evaluation method (100).

FIG.1

**Description**

BACKGROUND

1. Field of the invention

The present disclosure relates to the field of machine learning, and more particularly to a computer-implemented evaluation method for unsupervised robustness evaluation of an encoder model configured to encode an instance into a representation, and a computer-implemented training method for the encoder model. These methods may find applications in all kinds of industries, including the automotive industry. For instance, the method may be used to evaluate and train an encoder model to extract relevant information from a vehicle's environment for the vehicle to be adequately controlled, or from places such as a factory in order to monitor and support human activities therein.

2. Description of related art

Machine learning models known as encoder models, representation encoders or simply encoders, extract representations (also known as features) from inputs (instances) for further processing. Unsupervised and self-supervised models extract useful representations without requiring labels. They can learn natural patterns in the data and have been shown to be competitive to supervised models, e.g. for image classification, as they can leverage large unlabeled datasets. As labels are not used, such representation encoders can be used for various downstream tasks. This is particularly useful as encoders can be very expensive to train due to the amount of data used.
Therefore, applications are often built on top of public domain representation encoder models. However, lack of robustness of the encoder model can be propagated to the downstream task. Consider the following example of an impersonation attack: an attacker tries to fool a classifier that uses a representation encoder. The attacker has white-box access to the representation extractor (e.g. an open-source encoder model) but does not have access to the classification model that classifies the inputs based on their representations. By optimizing an input to be similar to a benign input, but to have the representation of a different target input, the attacker can fool the classifier. Even if the classifier is private, one can attack the combined system if the public encoder conflates two different concepts onto similar representations. Hence, robustness against such conflation is necessary to perform downstream inference on robust features.
Thus, there is a need for a way to evaluate robustness of representation encoders without specializing for a particular task.

SUMMARY

In this respect, the present disclosure relates to a computer-implemented evaluation method for unsupervised robustness evaluation of an encoder model configured to encode an instance, such as an image, into a representation, the evaluation method comprising:

- providing a testing set comprising at least one testing instance;
- generating at least one testing adversarial instance based on the testing set;
- evaluating unsupervised robustness of the encoder model with a measuring function which takes, as an input, a representation of the at least one testing adversarial instance and a representation of the at least one testing instance, encoded with the encoder model.

An encoder model, or simply encoder, is a machine learning (ML) model which may comprise one or more mathematical expressions configured to process an instance in order to output information representative of the instance, i.e. a representation. Weights (parameters) of the ML model may be iteratively updated by a training method. The ML model may comprise an artificial neural network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the training of the ANN. During the training process, the ANN adapts its synaptic weights and biases based on the learned situations. The weights and biases, once determined at the end of the training phase, may then remain constant or not during the exploitation phase.
A representation may be a one- or multi-dimensional feature vector. For example, the representation may be determined based on the content of the instance. An example would be to take the instance and process it by at least one (or e.g. three) layer of a neural network, in order to obtain the representation/feature vector. In a specific example, the at least one layer comprises at least one of a convolution, a pooling, and/or a FC (fully connected) layer.

However, encoder models and representations are known per se in the art and other examples are envisaged. In the following, unless mentioned to the contrary, the representations are obtained by the encoder model.

Hereinafter, unless otherwise stated, "the testing instance" refers to the at least one testing instance. More generally, hereinafter, the article "the" may refer to "the at least one". In practice, the testing set often comprises a plurality of testing instances.

A testing adversarial instance is an instance which is generated in order to be similar to one instance of the testing set but to have a representation similar to the representation of a different instance. As will be detailed later, this different instance may be targeted or untargeted. The purpose of a testing adversarial instance is to try to fool the downstream application of the encoder model by relying on a lack of robustness of the encoder model.

The measuring function, also known in the art as a metric, is a function which measures the robustness of the encoder model in an unsupervised manner. The robustness quantifies to what extent the encoder model is consistent when confronted to a testing adversarial instance, i.e. to what extent relatively close instances may be encoded as representations which are relatively far away from each other. To the contrary, a robust encoder model is expected to map relatively close instances to relatively close representations.

Unsupervised robustness evaluation means that the robustness is evaluated without relying on labels of the testing set and/or the testing adversarial instance. Such labels may exist but are neither required nor used by the evaluation method. Unsupervised robustness evaluation can thus be task-agnostic, in contrast to supervised assessment as labels are always, at least implicitly, associated with a specific task. Labels can also often be incomplete, misleading or stereotyping and can inadvertently impose biases in the robustness assessment. Therefore, the above evaluation method involves a robustness measure that does not require labels, and, thus, that can leverage a large amount of unlabeled data in an unbiased way.

In the proposed method, the measuring function takes, as an input, a representation of the at least one testing adversarial instance and a representation of the at least one testing instance. Both representations are extracted by the encoder model. Thanks to these provisions, the measuring function takes account of the local properties of the representations directly in the representation space, thus not relying on any labels. In this way, the proposed method can achieve unsupervised robustness evaluation without making any assumption about the downstream task. As a consequence, a same encoder model can be used for a plurality of downstream application in a robust and reliable manner.

The present disclosure is further directed to a computer-implemented training method for an encoder model configured to encode an instance into a representation, the training method comprising:

- providing a training set comprising at least one training instance;
- generating at least one training adversarial instance based on the training set;
- training the encoder model on the at least one training adversarial instance;
- evaluating unsupervised robustness of the trained encoder model with the above-described evaluation method.

The training set and the testing set should comprise instances of the same nature (e.g. images). The training set is generally different from the testing set. In practice, the training set and the testing set may be different parts of a single dataset.

Training the encoder model on the at least one training adversarial instance may be carried out by training techniques known per se in the art, depending on the selected encoder model. In addition to the training adversarial instance, the encoder model may be trained on part or all of the training set. Thanks to the training on the adversarial instance, the trained encoder model is intrinsically more robust irrespective of the downstream application, and this robustness can be appropriately checked through the evaluation method.

Optionally, the training method comprises repeating the training with different training parameters and/or different at least one training adversarial instance, and selecting the training parameters and/or the at least one training adversarial instance based on the evaluated unsupervised robustness of the trained encoder model.

Training parameters may include, without being limited to, any of parameters of the adversarial instance generation method, objective functions and number of iterations for iterative methods within the adversarial instance generation, as well as the parameters of the encoder model training method, its objective functions and number of training iterations.

The idea of repeating the training is to obtain different trained encoder models, to evaluate them with the evaluation method, and, based on that evaluation of the unsupervised robustness, to select the desired, generally, best-performing, trained encoder model. For instance, the repetition may be carried out until the evaluated unsupervised robustness of the trained encoder model meets a convergence condition, such as reaching a threshold or not improving significantly with iterations any longer. Otherwise, a Pareto front of the evaluated unsupervised robustness relative to two or more unsupervised and/or supervised measures may be considered, and the trained model may be selected on the Pareto front depending on other considerations than robustness, such as the accuracy or the computational cost of training.

In these embodiments, the repeating enables to obtain training parameters and/or training adversarial instances which make the trained encoder model robust in itself, irrespective of any downstream application.

Optionally, the measuring function includes a divergence, wherein the divergence is a function which takes two representations as an input and outputs a real number, and which has non-negativity and identity of indiscernibles. Non-negativity means that the output of the divergence is 0 or more (hence non-negative). Identity of indiscernibles means that the divergence between two representations is 0 if, and only if, the two representations are equal to each other. A distance is an example of a divergence. The divergence is a measure of how far away two representations are from each other, in a sense broader than distances. For instance, the divergence may not be isotropic or even symmetrical, for instance $d(x,y) = |x|\sqrt{(x-y)^2}$.

Since the measuring function includes a divergence, the calculation of the measuring function requires calculating the divergence. The measuring function depends on the choice of a divergence, or is parametrized by a divergence: the divergence determines what the measuring function will be.

Herein, for conciseness, the divergence between two instances refers to the divergence between the respective representations of these two instances.

Optionally, the at least one testing adversarial instance is a perturbation of a first testing instance, and the measuring function is defined as a probability that a divergence between a representation of the at least one testing adversarial instance and a representation of a second testing instance is less than a divergence between the representation of the at least one testing adversarial instance and a representation of the first testing instance. A perturbation of an instance is a variation of the instance which is of bounded size (norm), e.g. which may not be perceivable in the instance space. For instance, a perturbation of an image may be a similarly looking image, in which the variation may appear as a slight transformation of the image (e.g. deformation, noise, etc.). In this example, not perceivable means that a human being would identify both images to be the same, e.g. to have the same semantic content.

The probability that a divergence between a representation of the testing adversarial instance and a representation of a second testing instance is less than a divergence between the representation of the testing adversarial instance and a representation of the first testing instance measures a so-called break-away risk, namely a risk for the perturbation of the first instance to be encoded more like a second instance than like the first instance. This probability aims to measure the break-away risk around the first instance.

Optionally, the at least one testing adversarial instance is a perturbation of a first testing instance, and the measuring function is defined as a probability that a divergence between respective representations of any two instances is less than a divergence between the representation of the at least one testing adversarial instance and a representation of the first testing instance. This probability quantifies, in a relative manner, to what extent the encoder makes representations of close instances (here, the first instance and a perturbation thereof) far away from each other, where "far away" is determined relative to the divergence between respective representations of any two instances. This quantification may be used to compare different encoder models confronted with a same attack, as it is agnostic to the different representation magnitudes the encoder models may have.

Optionally, the measuring function is defined as a probability that there exists a first perturbation and a second perturbation, both less than a predetermined value, such that a representation of the second perturbation of a second instance is closer to a representation of a first instance than a representation of a first perturbation of a first instance is to the representation of the first instance. Like before, the predetermined value may define perturbations which are not perceivable in the instance space. This probability measures a so-called overlap risk, namely a risk that there exist perturbations under which the encoder does not distinguish between the two perturbed instances.

Although examples of the measuring function have been described individually, a plurality of measuring functions may be used to evaluate robustness of the encoder model.

Optionally, the at least one testing adversarial instance is generated based on a gradient of the divergence. For instance, the testing adversarial instance may be generated in a direction which maximizes the divergence, in order to be more likely to leverage possible weaknesses of the encoder model. The gradient may be calculated around a testing instance.

More generally, the at least one testing adversarial instance may be generated based on a gradient of a loss function, e.g. a loss function used to train the encoder model.

However, gradient-free methods for generating the testing adversarial instance are also encompassed, for instance via zeroth order black-box optimization (e.g. Pin-Yu Chen, Huan Zhang, Yash Sharma, Jinfeng Yi, and Cho-Jui Hsieh. Zoo: Zeroth order optimization based black-box attacks to deep neural networks without training substitute models. In Proceedings of the 10th ACM Workshop on Artificial Intelligence and Security, pages 15-26, 2017) or genetic algorithms (e.g. Moustafa Alzantot, Yash Sharma, Supriyo Chakraborty, Huan Zhang, Cho-Jui Hsieh, and Mani B Srivastava. Genattack: Practical black-box attacks with gradient-free optimization. In Proceedings of the Genetic and Evolutionary Computation Conference, pages 1111-1119, 2019).

Optionally, the at least one testing adversarial instance is selected as an instance which results in a relatively large value of the divergence with respect to a given instance of the testing set. Thus, the testing adversarial instance is more likely to leverage inconsistencies of the encoder model in order to fool the downstream application thereof. For instance, the given instance may be the testing instance from which the testing adversarial instance is generated. In an example, the testing adversarial instance is selected to maximize the divergence with the given instance. In another example, the testing adversarial instance is generated based on a gradient of the divergence, as explained above: while this does not guarantee that the divergence is maximized, this, by construction, results in a relatively large value of the divergence. A relatively large value may otherwise be obtained by constructing several testing adversarial instance candidates and selecting, as the testing adversarial instance, the candidate, the representation of which has the greatest divergence with respect to the given instance. Yet other methods are encompassed.

Optionally, likewise, the at least one training adversarial instance is selected as an instance which results in a relatively large value of the divergence with respect a given instance of training set. All the properties explained in the preceding paragraph can transpose to these embodiments.

Such attacks (i.e. generation of an adversarial instance) are called untargeted, as they try to maximize the divergence without preselecting the instance with which the encoder model would confuse the adversarial instance.

Optionally, the at least one testing adversarial instance is generated as a perturbation of a given instance which results in a relatively small value of the divergence with respect to another instance of the testing set. Thus, the testing adversarial instance is more likely to leverage inconsistencies of the encoder model in order to fool the downstream application thereof, by introducing confusion with said other instance. For instance, the given instance may be the testing instance from which the testing adversarial instance is generated. In an example, the testing adversarial instance is selected to minimize the divergence with the other instance. In another example, the testing adversarial instance is generated based on a gradient of the divergence, as explained above: while this does not guarantee that the divergence with the representation of the other instance is minimized, this, by construction, results in a relatively small value of said divergence. A relatively small value may otherwise be obtained by constructing several testing adversarial instance candidates and selecting, as the testing adversarial instance, the candidate, the representation of which has the smallest divergence with respect to the other instance. Yet other methods are encompassed.

Optionally, likewise, the at least one training adversarial instance is generated as a perturbation of a given instance which results in a relatively small value of the divergence with respect to another instance of the training set. All the properties explained in the preceding paragraph can transpose to these embodiments.

Such attacks are called targeted, as they try to minimize the divergence and introduce confusion with a preselected instance.

Although the generation methods for the adversarial instances have been presented individually, both may be combined in order to generate different adversarial instances and ensure that the encoder model is robust against both types of attacks.

Optionally, the at least one testing adversarial instance and/or the at least one training adversarial instance is generated in an iterative manner. This makes possible to generate a better adversarial instance, i.e. an adversarial instance which is likely to exploit the greatest inconsistencies of the encoder model. Iterative methods per se are known in the art and include, for instance, gradient-descent methods.

Optionally, the at least one testing instance and/or the at least one training instance is selected from images, videos, sounds, environment reconstruction data, sensor measurements, or any combination thereof. These types define the nature of the input data to the encoder model; as a consequence, the respective adversarial instances should be of the same nature.

Images may be acquired by a unimodal or multimodal image acquisition device, e.g. camera or camera arrays. "Camera" also encompasses event-based cameras, stereo cameras, and other specialty cameras. Sounds may be acquired by a microphone device. Videos are a combination of a plurality and images and optionally a soundtrack. Environment reconstruction data may be data obtained by one or more sensors such as LIDAR, RADAR and the like, which enable to reconstruct the three-dimensional environment around the sensor. Other sensor measurements may be thermal, electrical, electromagnetic, positional, speed, acceleration measurements and the like. The at least one testing instance and/or at least one training instance may be selected from physical data which enable a vehicle to understand its environment. The outputs of the sensors may be pre-processed to facilitate encoding by the encoder model.

In other embodiments, the at least one testing instance and/or the at least one training instance is selected from a web page, a document, etc.

Optionally, the at least one testing adversarial instance and/or the at least one training adversarial instance comprises a plurality of instances generated as a batch. Attacking a whole batch instead of single inputs enables to account for the interactions between the individual inputs in a batch. For example, training adversarial instances may be generated in order to conflate each training instance of the batch with each other training instance of the batch.

The present disclosure is further directed to a system configured to carry out the above-described evaluation method or training method. The system may have part or all of the above-described features. The system may have the hardware structure of a computer.

The present disclosure is further related to a computer program including instructions for executing the steps of the above described evaluation method or training method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described evaluation method or training method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a flow chart of methods according to an embodiment.
- Fig. 2 is a diagram illustrating the break-away risk and the overlap risk.

DETAILED DESCRIPTION OF EMBODIMENTS

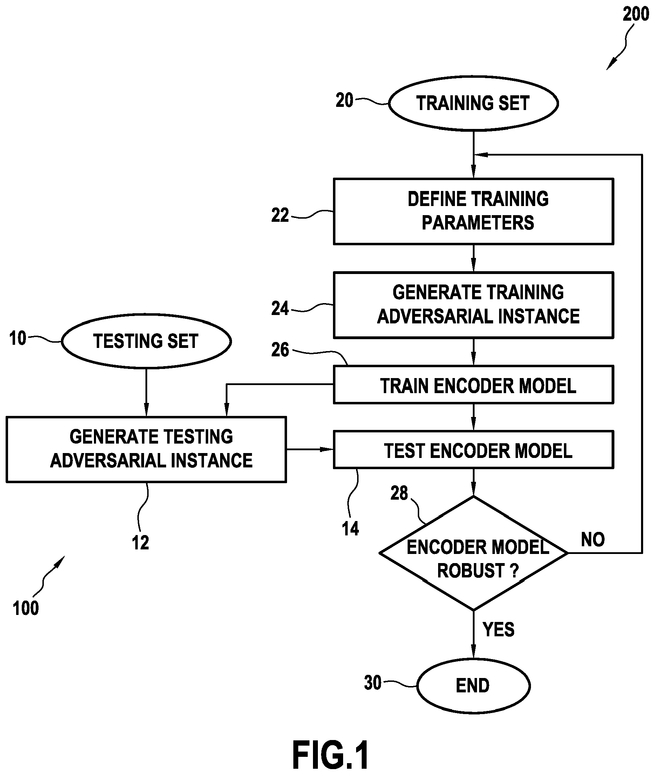

A computer-implemented evaluation method 100 according to an embodiment is described with reference to Fig. 1.

The evaluation method 100 aims to evaluate unsupervised robustness of an encoder model configured to encode an instance into a representation. For the sake of conciseness and for illustrating possible concrete implementations, the following description assumes that the instance is an image. However, other types of instances are envisaged, such as videos, sounds, environment reconstruction data, sensor measurements. These types of instances may also be combined.

The encoder model may be used in the context of a driving method for a vehicle, which driving method may comprise an acquisition step of acquiring one or more images (or other instances) from at least one in-vehicle sensor, an encoding step of extracting respective representation of the images by the encoder model, e.g. for further processing by computer vision models, and a step of controlling the vehicle on the basis of the extracted representations.

In other embodiments, the encoder model may be used in the context of a method for supporting human activities in a factory. For instance, the method may comprise an acquisition step of acquiring one or more images (or other instances) from at least one sensor in the factory, an encoding step of extracting respective representation of the images by the encoder model, e.g. for further processing by computer vision models, and a controlling step of controlling the factory facilities (i.e. starting/stopping a device, issuing a warning signal, recording data, etc.) on the basis of the extracted representations.

The encoder model may be a machine learning model, such as an artificial neural network, an engineered (hand-crafted) feature extractor, or other system that extracts representations from instance. For instance, the encoder model may comprise a convolutional neural network (CNN), recurrent neural network (RNN), or transformer-based neural network.

As illustrating in Fig. 1, the evaluation method 100 comprises a step 10 of providing a testing set comprising at least one testing instance. As the evaluation method 100 aims to evaluate the unsupervised robustness of the encoder model, the testing set needs no labels for the testing instances. Some testing sets, e.g. image datasets, are publicly available.

The evaluation method 100 further comprises a step 12 of generating at least one testing adversarial instance based on the testing set. As mentioned before, the testing adversarial instance aims to fool the downstream application of the encoder model by leveraging possible inconsistencies of the encoder model. The generation of a testing adversarial instance will be described in detail hereinafter.

After generating at least one testing adversarial instance, the evaluation method 100 comprises at step 14 of evaluating unsupervised robustness of the encoder model with a measuring function which takes, as an input, a representation of the at least one testing adversarial instance and a representation of the at least one testing instance. Both representations are encoded with the encoder model. As the measuring function works in the representation space, it is possible to evaluate the robustness of the encoder model without labels, i.e. in an unsupervised manner, and without relying on a particular downstream application. This ensures intrinsic robustness evaluation of the encoder model. The evaluation and the measuring functions will be described in detail hereinafter.

The evaluation method 100 may be used per se or in the context of a training method 200. Specifically, Fig. 1 illustrates an overview of a computer-implemented training method 200 for training the encoder model. As mentioned previously, the training method 200 comprises a step 20 of providing a training set comprising at least one training instance. The training instances, in this example, are images. Like the testing set, the training set requires no labels.

The training method 200 further comprises a step 22 of defining training parameters. These parameters may be hyperparameters for the training, e.g. the number of iterations (e.g. epochs) for the training, the number of training instances taken into account for training, etc.

The training method 200 further comprises a step 24 of generating at least one training adversarial instance based on the training set. As mentioned before, the training adversarial instance is provided to help the encoder model be robust against possible impersonation attacks, which try to fool the downstream application of the encoder model by leveraging possible inconsistencies of the encoder model. The generation of a training adversarial instance will be described in detail hereinafter.

The training method 200 further comprises a step 26 of training the encoder model on the at least one training adversarial instance. The encoder model may be trained on part or all of the training set too. Training a machine learning model is, per se, known in the art. Specific aspects in relation to the present disclosure will be detailed hereinafter.

Instead of performing steps 24, 26 in a sequential manner as illustrated, steps 24, 26 may be performed in an iterative manner. For example, if the training is planned on N epochs, for each epoch, the training set may be split into M batches. The training adversarial instances may be generated for each batch, and the encoder model trained on a batch and the corresponding training adversarial instances. This would be repeated until the epochs and the batches within each epoch are exhausted. Thus, steps 24, 26 would be repeated NM times.

The trained encoder model, in particular its unsupervised robustness, may then be evaluated thanks to the evaluation method 100. As shown in Fig. 1, the step 14 of evaluating unsupervised robustness takes place after the step 26 of training. Besides, since the step 12 of generating testing adversarial instances leverages the inconsistencies of the encoder model, the encoder model trained at step 26 may be used at step 12 to (re)generate the testing adversarial instances. However, if the evaluation method 100 is carried out independently of the training, the step 12 may directly take the trained encoder model as an input, without needing to generate the testing adversarial instances multiple times.

In order to ensure a satisfactory robustness of the encoder model, the step 26 of training may be repeated with different training parameters and/or different training adversarial instances. Specifically, the training method 200 may comprise a step 28 of checking whether the evaluated robustness meets a convergence condition that indicates that the encoder model is robust enough. In an example, the convergence condition includes the robustness reaching a threshold. The threshold may be predetermined and may correspond to a level of robustness that is regarded as good enough. In another example, the convergence condition includes the difference between robustness evaluated at iteration N and robustness evaluated at iteration N-1 being less than a threshold. This condition corresponds to checking whether the robustness improves over the iterations; if the robustness does not improve significantly any longer, it may be decided to stop the iterations. These conditions may be used alone, as alternatives or cumulatively.

If the convergence condition is not met (NO at step 28), the training method 200 may loop back to either one of steps 22, 24, so that the training is repeated with different training parameters. In this repetition, at least one of steps 22, 24 should be carried out.

Conversely, if the convergence condition is met (YES at step 28), the training method 200 may terminate (step 30). The latest parameters and/or training adversarial instances for training the encoder model are selected accordingly, and the resulting trained encoder model is regarded as robust enough.

The generation of adversarial instances and the robustness evaluation, according to an embodiment, are now explained in more details. However, as highlighted above, other embodiments are encompassed.

Let $f: \mathcal{X} \to \mathcal{R}$ be a differentiable encoder model from the input space $\mathcal{X} = [0; 1]^n$ (e.g. a space containing images with $n$ pixels) to a representation space $R$. It is assumed that white-box access to $f$ is available: both $f(x)$ and $\frac{df(x)}{dx}$ can be queried at all $x \in \mathcal{X}$. It is assumed that $\mathcal{R}$ is endowed with a divergence $d: \mathcal{R} \times \mathcal{R} \to \mathbb{R}_{\geq 0}$. That is, the divergence is a function which takes two representations as an input and outputs a real number. In addition, the divergence has the non-negativity $(d(r, r') \geq 0, \forall r, r' \in \mathcal{R})$ and identity of indiscernibles ($d(r, r') = 0 \Leftrightarrow r = r'$) properties. Divergences include metrics on $R$ as well statistical distances. The testing set D of independent and identically distributed instances from a distribution $\mathcal{D}$ over $\mathcal{X}$ is given.

Denote perturbations of the input as $\hat{x} = x + \delta$, $\|\delta\|_\infty \leq \epsilon$. Norms different from $\ell_\infty$ can be used. $\epsilon$ is chosen to be small enough so that any $\hat{x}$ is visually indistinguishable from x. Typical values for $\epsilon$ are 0.05 or 0.10 but other values can also be used. A desirable property for the encoder f is to map $\hat{x}$ close to x, i.e. $d(f(x), f(\hat{x}))$ should be "small". In this example, this property corresponds to unsupervised robustness, which may also be seen as a representational robustness: the divergence in the representation space should be consistent with the distance in the instance space.

Whether a value for $d(f(x), f(\hat{x}))$ is "small" or not may depend on the encoder, as different encoders produce representations of different scales, as well as on the instance x, as some parts of the representation manifold can be more densely packed than others. To circumvent these issues, the present disclosure considers the break-away risk, i.e. the probability that, in the representation space, the worst-case perturbation of x with maximum size $\epsilon$ is closer to a different instance x' than it is to x:

$$\underset{x,x'\sim\mathcal{D}}{\mathrm{P}}\left[d(f(\hat{x}),f(x')) < d(f(\hat{x}),f(x))\right], \ \hat{x} \in \arg \sup_{\tilde{x}\in B(x,\epsilon)} d(f(x),f(\tilde{x})). \tag{1}$$

where $B(x, \epsilon)$ is the ball of center x and radius $\epsilon$, with the same norm as the bound for $\delta$, and $\hat{x}$ is a perturbation of x which maximizes the divergence with x. In other words, equation (1) defines the probability that a divergence between a representation of the at least one testing adversarial instance $f(\hat{x})$ and a representation of a second testing instance $f(x')$ is less than a divergence between the representation of the at least one testing adversarial instance $f(\hat{x})$ and a representation of the first testing instance $f(x)$, in the particular case where the testing adversarial instance $\hat{x}$ is a perturbation of the first testing instance x and maximizes the divergence with the first testing instance x (i.e. $\hat{x}$ is a worst-case testing adversarial instance). Equation (1) may be used as a measuring function which includes a divergence.

Another indication of lack of unsupervised robustness is if $f(B(x, \epsilon))$ and $f(B(x', \epsilon))$ overlap as then there exist perturbations $\delta, \delta'$ under which f does not distinguish between the first testing instance x and the second testing instance x', i.e. $f(x + \delta) = f(x' + \delta')$. This is called herein overlap risk and is defined it as:

$$\underset{x,x'\sim\mathcal{D}}{\mathrm{P}}\left[d\left(f(x),f(a(x',x))\right) < d\left(f(x),f(a(x,x'))\right)\right],$$
$$a(o,t) \in \arg \inf_{\tilde{x}\in B(o,\epsilon)} d(f(t),f(\tilde{x})). \tag{2}$$

where $a(o,t)$ defines an instance which is a perturbation of o (i.e. contained in $B(o, \epsilon)$) and which minimizes the divergence with respect to t. Thus, this probability is a probability that there exists a first perturbation $\delta$ and a second perturbation $\delta'$, both less than a predetermined value $\varepsilon$, such that a representation of the second perturbation of a second instance $f(a(x',x)) = f(x' + \delta')$ is closer (in terms of divergence) to a representation of a first instance $f(x)$ than a representation of a first perturbation of a first instance $f(a(x, x')) = f(x + \delta)$ is to the representation of the first instance $f(x)$, in the particular case where the first and second perturbations respectively minimize the divergence with the second and first testing instance. Equation (2) may be used as a measuring function which includes a divergence.

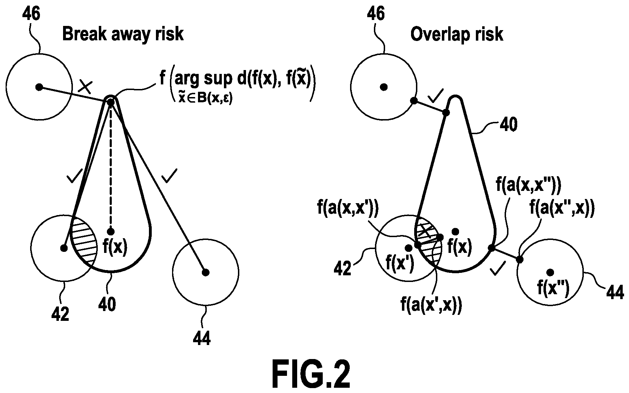

The break-away risk measures whether the worst-case perturbation results in a too large a divergence in R, while the overlap risk measures whether on average perturbations are concentrated close enough to $f(x)$. These risks are illustrated in Fig. 2, in which the left diagram refers to the break-away risk and the right diagram refers to the overlap risk. Both diagrams illustrate the representation space R, in which reference 40 denotes the encoded region of a first testing instance and perturbations therefore, i.e. $f(B(x, \epsilon))$. Note that the encoded region may not be a ball, as the encoder may not be isotropic. Encoded regions 42, 44, 46 are respectively provided for other testing instances, including a second testing instance x' and a third testing instance x". In both diagrams, the divergences which increase the corresponding risk are shown with a cross, whereas the divergences which decrease the corresponding risk are shown with a check mark.

As can be seen from equations (1) and (2), no labels are required: the two measuring functions are defined with respect to the local properties of the representation manifold of f under D. They neither explicitly nor implicitly consider decision boundaries or underlying classes, as no assumptions are made about the downstream task.

The above considerations are believed to apply even if the first testing instance x and the second testing instance x' are very similar. First, the probability of very similar pairs would be low in a sufficiently diverse distribution $\mathcal{D}$. Second, there is no clear notion of similarity on $\mathcal{X}$ without making assumptions about the downstream tasks. Finally, even if x is very similar to x' it should still be more similar to any $\hat{x}$, as x and $\hat{x}$ are defined, in the case of images, to be visually indistinguishable.

In practice, it may not be tractable to compute the supremum and infimum in equations (1) and (2) exactly for a general encoder model *f.* Instead, they can be approximated: for instance, instead of selecting the testing adversarial instance that maximizes the divergence with the first testing instance in Eq. (1), one could select an adversarial instance which results in a relatively large value of the divergence with respect to the first testing instance. Likewise, instead of selecting the testing adversarial instance that minimizes the divergence in Eq. (2), one could select a perturbation of the first instance which results in a relatively small value of the divergence with respect to the second instance, and conversely a perturbation of the second instance which results in a relatively small value of the divergence with respect to the first instance.

These approximated adversarial instances may be obtained in several ways. In an example, the testing adversarial instance is approximated via constrained optimization in the form of adversarial attacks. Specifically, the testing adversarial example may be generated based on a gradient of the divergence.

In an example, an adversarial instance $\hat{x}$ approximating the supremum in Eq. (1) can be constructed by pushing $f(\hat{x})$ away from $f(x)$:

$$\hat{x} = \mathrm{clip}\left(x + \alpha\,\mathrm{sign}\left(\nabla_x d(f(x), f(x + \eta))\right)\right),$$

where $\alpha \in \mathbb{R}_{>0}$ is a value representing a size of the perturbation, clip $(x)$ clips all values of $x$ to be between 0 and 1 (or, more generally, clips $x$ to be in $X$), sign($t$) returns 1 if $t$ is positive and -1 is $t$ is negative, and $\eta \in [0;\xi]^n$ is a small perturbation ensuring that the gradient $\nabla_x d$ is not zero. The upper bound $\xi$ is chosen to be small relative to $\epsilon$, e.g., $\xi$=0.001.

This example illustrates how an untargeted adversarial testing instance can be generated in an unsupervised context, independently of the loss used for training the encoder model. Therefore, this generation method is suitable for comparing different models.

In another example, a given instance $x_i \in D$ can also be perturbed so that its representation becomes close to $f(x_j)$ for some other instance $x_j \in D, x_j \neq x_i$. Then a downstream model would struggle to distinguish between the attacked input and the target $x_j$. This approximates the infimum in Eq. (2) and is the targeted mode of the previously described generation of an untargeted adversarial testing instance:

$$\hat{x}_i^{\to j} = \mathrm{clip}\left(x_i - \alpha\,\mathrm{sign}\left(\nabla_{x_i} d(f(x_i), f(x_j))\right)\right)$$

Besides, the at least one testing adversarial instance may be generated in an iterative manner. For instance, instead of generating the testing adversarial instance in a single step as described above, the testing adversarial instance may be generated as the result of a sequence such as:

$$\hat{x}_0 = \hat{x}_0^{\to j} = \mathrm{clip}\left(x + U^n[-\epsilon, \epsilon]\right) \tag{3}$$

$$\hat{x}_{u+1} = \mathrm{clip}\left(\Pi_{x,\epsilon}\left[\hat{x}_u + \alpha\,\mathrm{sign}\left(\nabla_{\hat{x}_u} d(f(\hat{x}_u), f(x))\right)\right]\right) \tag{4}$$

$$\hat{x}_{u+1}^{\to j} = \mathrm{clip}\left(\Pi_{x,\epsilon}\left[\hat{x}_u^{\to j} - \alpha\,\mathrm{sign}\left(\nabla_{\hat{x}_u^{\to j}} d(f(\hat{x}_u^{\to j}), f(x_j))\right)\right]\right) \tag{5}$$

where Eq. (3) is a randomized initialization, here with $U^n[-\epsilon, \epsilon]$ being a vector of $n$ components each sampled independently from the uniform distribution $[-\epsilon, \epsilon]$ , Eq. (4) defines terms of the sequence to obtain an untargeted attack and Eq. (5) defines terms of the sequence to obtain a targeted attack towards $x_j$, and $\Pi_{x,\epsilon}(x')$ is the projection of $x'$ onto $B(x, \epsilon)$, the $\ell_\infty$ ball of radius $\epsilon$ centered at $x$.

The sequence may stop when a convergence condition is met, e.g. when the gradient of the divergence in Eq. (4) or (5) is less than a threshold, and/or when a predetermined number of terms have been calculated. Other implementation details may be considered in view of gradient descent techniques which are known per se in the art.

The above examples rely on the principle of perturbing an input in order to maximize or minimize the divergence *d.* However, other embodiments are encompassed: for instance, instead of considering the divergence, one may consider a differentiable loss function. In this context, given an instance $x \in \mathcal{X}$ and a loss function $\mathcal{L}: (\mathcal{X} \to \mathcal{R}) \times \mathcal{X} \to \mathbb{R}$ , a one-step loss-based attack takes a step in the direction maximizing $\mathcal{L}$ :

$$\hat{x} = \mathrm{clip}\left(x + \alpha \, \mathrm{sign}\left(\nabla_x \mathcal{L}(f, x)\right)\right).$$

The above-described untargeted attack is a particular case of this equation, with $\mathcal{L}(f, x) = d(f(x), f(x + \eta))$. Likewise, the above-described targeted attack is a particular case of this equation, with $\mathcal{L}(f, x) = -d(f(x), f(\sigma(x)))$ where $\sigma(x)$ is a function that returns a sample from $D$ such that $\sigma(x) \neq x$.

Similarly, for a loss function $\mathcal{L}: (\mathcal{X} \to \mathcal{R}) \times \mathcal{X} \times \mathcal{X} \to \mathbb{R}$ taking a representation encoder $f$, an instance $x$, and the previous iteration of the attack as inputs, an iterative version of the loss-based attack may be defined as:

$$\hat{x}_0 = \mathrm{clip}\left(x + U^n[-\epsilon, \epsilon]\right),$$

$$\hat{x}_{u+1} = \mathrm{clip}\left(\Pi_{x,\epsilon}\left[\hat{x}_u + \alpha \, \mathrm{sign}\left(\nabla_{\hat{x}_u} \mathcal{L}(f, x, \hat{x}_u)\right)\right]\right).$$

The above-described untargeted attack (equations (3) and (4)) is a particular case of this equation, with $\mathcal{L}(f, x, \hat{x}_u) = d(f(\hat{x}_u), f(x))$. Likewise, the above-described untargeted attack (equations (3) and (5)) is a particular case of this equation, with $\mathcal{L}(f, x, \hat{x}_u) = -d(f(\hat{x}_u), f(\sigma(x)))$.

Other loss functions could be considered, which have the structure $\mathcal{L}: (\mathcal{X} \to \mathcal{R}) \times \mathcal{X} \to \mathbb{R}$ and which indeed represent loss, i.e. the loss function increases when similar instances are mapped, by the encoder, far away from each other in the representation space, or when dissimilar instances are mapped, by the encoder, close to each other in the representation space.

Although they have been presented in an instance-wise version, it is possible to attack whole batches instead of single inputs to account for the interactions between the individual inputs in a batch. That is, the at least one testing adversarial instance comprises a plurality of instances generated as a batch. Any of the above attacks can be extended to work over batches by independently attacking all inputs from a batch $X = [x_1, \ldots, x_N] \subset \mathcal{X}$. This can be done with a more general loss function $\bar{\mathcal{L}}: (\mathcal{X} \to \mathcal{R}) \times \mathcal{X}^N \to \mathbb{R}$. The testing adversarial batch may be defined as:

$$\hat{X} = \mathrm{clip}\left(X + \alpha \, \mathrm{sign}\left(\nabla_X \bar{\mathcal{L}}(f, X)\right)\right).$$

Similarly to the above, the testing adversarial batch may be adapted to be generated with an iterative method.

Although the generation of adversarial instances has been detailed with respect to testing instance in the evaluation method 100, they may be used to generate at least one training adversarial instance in the context of the training method 200. Adversarial training is a min-max problem with the objective of minimizing a loss relative to a worst-case perturbation that maximizes it. As the optimums in Eqs. (1) and (2) may not be available, any of the aforementioned attacks can be used for the inner optimization for adversarial training, namely for determining the worst-case perturbation that maximizes the loss. One may use, in particular, the instance-wise iterative method and the batch-wise loss-based iterative method described above, as they are simple to implement and can be applied to any representation learning model.

The success of a supervised attack is clear-cut: the question is whether the predicted class is different from the one of the clean sample (i.e. the testing instance which originally belonged to the testing set, as opposed to the testing adversarial instance). In the unsupervised case, however, it is not clear when an adversarial attack results in a representation that is "too far" from the clean one. In order to overcome this issue, for instance, quantiles may be used to quantify the divergence.

For untargeted attacks, the divergence $d(f(x), f(x))$ may be measured relative to the distribution of divergences between representations of samples from $\mathcal{D}$. In particular, one may report the so-called universal quantile $q = \mathbb{P}_{x', x'' \sim \mathcal{D}}[d(f(x'), f(x'')) \leq d(f(\hat{x}), f(x))]$. This probability is independent of downstream tasks and depends only on the properties of the encoder and D. This quantification can be used to compare different models, as it is agnostic to the different representation magnitudes models may have. In practice, the quantile values can be estimated from the testing set $D$.

Universal quantiles may be applied to targeted attacks as well. However, considering that targeted attacks try to "impersonate" a particular target instance, relative quantiles may be used to assess their success. The attack may be assessed as the divergence $d(f(\hat{x}_i^{\rightarrow j}), f(x_j))$, induced by the attack, relative to $d(f(x_i), f(x_j))$, which is the original divergence between the clean instance and the target. The relative quantile for a targeted attack $\hat{x}_i^{\rightarrow j}$ is then the ratio $d(f(\hat{x}_i^{\rightarrow j}), f(x_j))/d(f(x_i), f(x_j))$.

Quantiles are a good way to assess the success of individual attacks or to compare different models. However, they do not take into account the local properties of the representation manifold, i.e. that some regions of $\mathcal{R}$ might be more densely populated than others. The break away and overlap risk metrics are defined herein with this exact purpose.

For estimating the break-away risk, as discussed above, the supremum in Eq. (1) may not be computed explicitly. Instead, it can be approximated using the above-described untargeted attacks. A Monte-Carlo estimate of Eq. (1) can be computed by sampling pairs of instances $(x,x')$ from the testing set $D$ and performing an untargeted attack on $x$, for example with any of the above-described methods.

As the break-away risk can be very small for robust encoders, one could also report the fraction of samples in $D' \subseteq D$ whose untargeted attacks $\hat{x}$ would have their nearest clean neighbour in $D$ being their corresponding clean instance $x$. That is:

$$\frac{1}{|D'|} \sum_{x \in D'} \mathbb{1}\left[\nexists x' \in D, x' \neq x, \text{ s.t. } d(f(x'), f(\hat{x})) < d(f(x), f(\hat{x}))\right]. \tag{6}$$

For estimating the overlap risk, as discussed above, the infimums in Eq. (2) may not be computed explicitly. Instead, they can be approximated using the above-described targeted attacks. Hence, an estimate of Eq. (2) can be computed by sampling pairs $(x_i, x_j)$ from the testing set $D$ and computing the targeted attacks $\hat{x}_i^{\rightarrow j}$ and $\hat{x}_j^{\rightarrow i}$. The overlap risk estimate is then the fraction of pairs for which $d(f(x_i), f(\hat{x}_j^{\rightarrow i})) < d(f(x_i), f(\hat{x}_i^{\rightarrow j}))$.

In Eq. (2) one takes into account only whether overlap occurs but not the magnitude of the violation. Another measuring function may take into account the margin between the two attacked representation, e.g. normalized by the divergence between the clean instances, for instance:

$$\frac{d(f(x_i), f(\hat{x}_j^{\rightarrow i})) - d(f(x_i), f(\hat{x}_i^{\rightarrow j}))}{d(f(x_i), f(x_j))}$$

for randomly selected pairs $(x_i, x_j)$ from the testing set $D$. If overlap occurs, this ratio would be negative, with more negative values pointing to stronger violations.

Experiments have been conducted by the inventors to assess the robustness of several state-of-the-art encoder models against the unsupervised attacks and robustness measures described above. In the experiments, targeted and untargeted adversarial instances were generated iteratively with $d(r,r') = \|r - r'\|_2$ (Euclidian distance) for 3 iterations with $\epsilon = 0.05$ and $\alpha = 0.001$. The experiments were conducted on publicly available models including the ResNet50-based self-supervised learning model MOCOv2 (Xinlei Chen, Haoqi Fan, Ross Girshick, and Kaiming He. Improved baselines with momentum contrastive learning. Preprint arXiv:2003.04297, 2020d - 200 epochs), and on a version of MOCOv2 fine-tuned for 10 iterations by adding adversarial examples to its training instances.

Results show that amongst the tested models, none dominates on all unsupervised robustness measuring functions. However, unsupervised adversarial training, that is the training method 200, boosts robustness across all measures. These results are achieved with only 10 iterations of fine-tuning of the encoder model. Although the added robustness comes at the price of reduced accuracy, the trade-off between the adversarial and standard objectives during training can be fine-tuned in order to reduce the accuracy decrease.

In addition, the inventors have shown that the superior unsupervised robustness performance is not due to gradient masking, by assessing certified accuracy on a classification task. The results demonstrate that the training method 200 also boosts the downstream certified accuracy. Besides, the inventors have shown that the adversarially trained encoder models have better consistency between standard and low-pass accuracy. Therefore, the training method 200 can help with learning the robust low-frequency features and rejecting high-frequency non-semantic ones.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented evaluation method (100) for unsupervised robustness evaluation of an encoder model (f) configured to encode an instance, such as an image, into a representation, the evaluation method comprising:

   - providing (10) a testing set comprising at least one testing instance ($x$);
   - generating (12) at least one testing adversarial instance ($\hat{x}$) based on the testing set;
   - evaluating (14) unsupervised robustness of the encoder model with a measuring function which takes, as an input, a representation ($f(\hat{x})$) of the at least one testing adversarial instance and a representation ($f(x)$) of the at least one testing instance, encoded with the encoder model.

2. A computer-implemented training method (200) for an encoder model ($f$) configured to encode an instance into a representation, the training method comprising:

   - providing (20) a training set comprising at least one training instance;
   - generating (22) at least one training adversarial instance based on the training set;
   - training (24) the encoder model on the at least one training adversarial instance;
   - evaluating unsupervised robustness of the trained encoder model with the evaluation method (100) of claim 1.

3. The training method of claim 2, comprising repeating the training (24) with different training parameters and/or different at least one training adversarial instance, and selecting the training parameters and/or the at least one training adversarial instance based on the evaluated unsupervised robustness of the trained encoder model.

4. The method of any one of claims 1 to 3, wherein the measuring function includes a divergence (d), wherein the divergence is a function which takes two representations as an input and outputs a real number, and which has non-negativity and identity of indiscernibles.

5. The method of claim 4, wherein the at least one testing adversarial instance ($\hat{x}$) is a perturbation of a first testing instance ($x$), and the measuring function is defined as a probability that a divergence between a representation of the at least one testing adversarial instance($f(\hat{x})$) and a representation ($f(x')$) of a second testing instance ($x'$) is less than a divergence between the representation of the at least one testing adversarial instance ($f(\hat{x})$) and a representation of the first testing instance ($f(x)$).

6. The method of claim 4, wherein the measuring function is defined as a probability that there exists a first perturbation ($\delta$) and a second perturbation ($\delta'$), both less than a predetermined value ($\in$), such that a representation of the second perturbation of a second instance ($f(x' + \delta')$) is closer to a representation of a first instance ($f(x)$) than a representation of a first perturbation of a first instance ($f(x + \delta)$) is to the representation of the first instance ($f(x)$).

7. The method of any one of claims 4 to 6, wherein the at least one testing adversarial instance is generated based on a gradient of the divergence (d).

8. The method of any one of claims 4 to 7, wherein the at least one testing adversarial instance and/or the at least one training adversarial instance ($\hat{x}$) is selected as an instance which results in a relatively large value of the divergence with respect to a given instance ($x$) of the testing set and/or training set, respectively.

9. The method of any one of claims 4 to 7, wherein the at least one testing adversarial instance and/or the at least one training adversarial instance ( $\hat{x}_i^{\rightarrow j}$ ) is generated as a perturbation of a given instance ($x_i$) which results in a relatively small value of the divergence (d) with respect to another instance ($x_j$) of the testing set and/or training set, respectively.

10. The method of any one of claims 1 to 9, wherein the at least one testing adversarial instance and/or the at least one training adversarial instance ($\hat{x}_{u+1}$, $\hat{x}_{u+1}^{\rightarrow j}$ ) is generated in an iterative manner.

11. The method of any one of claims 1 to 10, wherein the at least one testing instance and/or the at least one training instance (x) is selected from images, videos, sounds, environment reconstruction data, sensor measurements, or any combination thereof.

12. The method of any one of claims 1 to 11, wherein the at least one testing adversarial instance and/or the at least one training adversarial instance ($\hat{x}$) comprises a plurality of instances ($\hat{X}$) generated as a batch.

13. A computer program including instructions for executing the steps of the method of any one of claims 1 to 12 when said program is executed by a computer.

14. A recording medium readable by a computer and having recorded thereon a computer program including instructions for executing the steps of the method of any one of claims 1 to 12.

FIG.1

**Break away risk**

$$f\left(\underset{\tilde{x}\in B(x,\varepsilon)}{\arg\sup}\, d(f(x), f(\tilde{x}))\right)$$

f(x)

**Overlap risk**

f(a(x,x'))
f(a(x,x''))
f(a(x'',x))
f(x')
f(x)
f(a(x',x))
f(x'')

FIG.2

Europäisches
Patentamt

European
Patent Office

Office européen
des brevets

# EUROPEAN SEARCH REPORT

**Application Number**

EP 22 19 8157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wang Zekai ET AL: "Robustness Verification for Contrastive Learning", , 23 July 2022 (2022-07-23), pages 1-19, XP093021177, Retrieved from the Internet: URL:https://proceedings.mlr.press/v162/wang22q/wang22q.pdf [retrieved on 2023-02-06] * the whole document * | 1-14 | INV. G06N3/0455 G06N3/088 G06N3/094 |
| A | MINSEON KIM ET AL: "Adversarial Self-Supervised Contrastive Learning", ARXIV.ORG, CORNELL UNIVERSITY LIBRARY, 201 OLIN LIBRARY CORNELL UNIVERSITY ITHACA, NY 14853, 26 October 2020 (2020-10-26), XP081798911, * the whole document * | 1-14 | |
| A | Ho Chih-Hui ET AL: "Contrastive Learning with Adversarial Examples", , 22 October 2020 (2020-10-22), pages 1-13, XP093021401, DOI: 10.48550/arxiv.2010.12050 Retrieved from the Internet: URL:https://proceedings.neurips.cc/paper/2020/file/c68c9c8258ea7d85472dd6fd0015f047-Paper.pdf [retrieved on 2023-02-07] * the whole document * | 1-14 | TECHNICAL FIELDS SEARCHED (IPC) G06N |

-/--

The present search report has been drawn up for all claims

| Place of search | Date of completion of the search | Examiner |
|---|---|---|
| The Hague | 13 February 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

<table>
<tr><td>Europäisches Patentamt<br>European Patent Office<br>Office européen des brevets</td><td>**EUROPEAN SEARCH REPORT**</td><td>Application Number<br><br>**EP 22 19 8157**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Cemgil A Taylan ET AL: "Adversarially Robust Representations With Smooth Encoders",<br><br>,<br>1 January 2020 (2020-01-01), pages 1-20, XP093021402,<br>Retrieved from the Internet:<br>URL:https://openreview.net/pdf?id=H1gfFaEY DS<br>[retrieved on 2023-02-07]<br>* the whole document *<br>----- | 1-14 | |
| T | ALEKSANDAR PETROV ET AL: "Robustness of Unsupervised Representation Learning without Labels",<br>ARXIV.ORG, CORNELL UNIVERSITY LIBRARY, 201 OLIN LIBRARY CORNELL UNIVERSITY ITHACA, NY 14853,<br>8 October 2022 (2022-10-08), XP091338155,<br>* the whole document *<br>----- | | |

**TECHNICAL FIELDS SEARCHED (IPC)**

The present search report has been drawn up for all claims

| Place of search | Date of completion of the search | Examiner |
|---|---|---|
| The Hague | 13 February 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PIN-YU CHEN ; HUAN ZHANG ; YASH SHARMA ; JINFENG YI ; CHO-JUI HSIEH.** Zoo: Zeroth order optimization based black-box attacks to deep neural networks without training substitute models. *Proceedings of the 10th ACM Workshop on Artificial Intelligence and Security,* 2017, 15-26

- **MOUSTAFA ALZANTOT ; YASH SHARMA ; SUPRIYO CHAKRABORTY ; HUAN ZHANG ; CHO-JUI HSIEH ; MANI B SRIVASTAVA.** Genattack: Practical black-box attacks with gradient-free optimization. *Proceedings of the Genetic and Evolutionary Computation Conference,* 2019, 1111-1119
- **XINLEI CHEN ; HAOQI FAN ; ROSS GIRSHICK ; KAIMING HE.** Improved baselines with momentum contrastive learning. *arXiv:2003.04297*